Europäisches Patentamt

European Patent Office

Office européen des brevets

(19)

(11)  EP 0 540 417 B1

(12)  **FASCICULE DE BREVET EUROPEEN**

(45) Date de publication et mention
de la délivrance du brevet:
**07.01.1998  Bulletin 1998/02**

(51) Int Cl.⁶: **H02P 6/06**, H02H 7/085

(21) Numéro de dépôt: **92402931.7**

(22) Date de dépôt: **28.10.1992**

(54) **Dispositif de protection contre les surcharges pour moteur électrique à commutation électronique**

Überlastschutzvorrichtung für elektronisch geschalteten Elektromotor

Overload protection device for electronic commutated electric motor

(84) Etats contractants désignés:
**DE GB IT**

(30) Priorité: **31.10.1991  FR 9113476**

(43) Date de publication de la demande:
**05.05.1993  Bulletin 1993/18**

(73) Titulaire: **VALEO THERMIQUE HABITACLE
78320 Le Mesnil-Saint-Denis (FR)**

(72) Inventeurs:
• **Ortega, Jean-Marc
  F-31000 Toulouse (FR)**
• **Trouche, Nicolas
  F-78990 Elancourt (FR)**

• **Robino-Rizet, Jean-Luc
  F-91300 Massy (FR)**

(74) Mandataire: **Gamonal, Didier et al
  Valeo Management Services
  Propriété Industrielle
  2, rue André Boulle,
  B.P. 150
  94004 Créteil (FR)**

(56) Documents cités:
**DE-A- 3 513 179        US-A- 4 044 287
US-A- 4 578 623        US-A- 4 694 371**

• **PATENT ABSTRACTS OF JAPAN, vol. 8, no. 78
  (E-237), 10 Avril 1984 & JP-A-58 224 590
  (SHIBAURA SEISAKUSHO)**

## Description

La présente invention concerne un dispositif de protection d'un moteur à commutation électronique contre les surcharges électriques. Elle concerne aussi un moteur électrique équipé d'un tel dispositif de protection.

Les moteurs concernés principalement par l'invention sont du type à courant continu à commutation électronique. Le rotor est constitué par au moins un aimant permanent comportant donc au moins une paire de pôles magnétiques. Le stator comporte au moins deux bobines, appelées phases ou enroulements qui sont alimentées avec des lois de phase déterminées.

Dans le mode de réalisation qui sera détaillé plus loin, à titre d'exemple non limitatif, une première extrémité de chaque bobine est connectée par un point commun à la borne de tension positive d'une alimentation électrique comme la batterie d'un véhicule.

Une seconde extrémité de chaque bobine, dit pied d'enroulement, est reliée à la borne de tension négative de l'alimentation électrique ou à la masse, par l'intermédiaire d'un circuit de commutation électronique commandé par impulsions. Un tel circuit est monodirectionnel. Les impulsions sont générées en synchronisme par un circuit logique de pilotage qui reçoit un signal de mesure d'au moins une grandeur de mesure sur la rotation du moteur, comme l'angle instantané de rotation. Cette mesure peut être élaborée par un capteur, comme un codeur incrémental, ou par un circuit de détection de la force contre-électromotrice (f.c.e.m.) générée par chaque phase du stator bobiné. La sortie du circuit de détection de la force contre-électromotrice est exploitée, de façon à permettre d'exciter les enroulements statoriques en synchronisme avec la position du rotor selon les lois de phase prédéterminées qui constituent un plan d'alimentation de chaque phase.

En fait, la commutation sur chaque bobine est exécutée au moyen d'un transistor à effet de champ dont la tension drain-source est déterminée par la tension appliquée à l'électrode de grille. Quand la tension drain-source prend une valeur proche de la tension d'alimentation, l'enroulement n'est plus parcouru par un courant.

D'une manière générale, plus la tension drain-source diminue, plus la tension sur la phase augmente et donc, plus le courant dans la phase augmente. En régime nominal, on règle le fonctionnement du moteur pour avoir une charge électrique admissible. A cette fin, le moteur est connecté à un circuit de puissance contrôlé par un circuit de contrôle qui reçoit une consigne, par exemple fixant sa vitesse de rotation, ou tout autre paramètre de sortie de type mécanique désiré.

Le problème à la base de l'invention apparaît notamment lors de la variation de vitesse de rotation du moteur au démarrage ou en fonctionnement.

Après analyse, on a trouvé que les trois causes principales de surcharge électrique lors du fonctionnement d'un moteur à commutation électronique étaient dues :

a) à une variation du couple résistant ; c'est le cas quand le moteur est couplé à la turbine d'un groupe moto-ventilateur destiné à la climatisation d'un véhicule. Quand le véhicule entre dans un tunnel ou qu'il croise un poids lourd à grande vitesse, le choc aérolique provoque une brusque augmentation du couple résistant qui se traduit par une surcharge électrique sur l'alimentation ;
b) à une variation imprévue du couple résistant par exemple due au blocage temporaire d'un palier ;
c) à une tension trop importante de la source d'alimentation continue du moteur.

De plus, une brusque variation de vitesse, exécutée par un changement de la consigne, provoque une surcharge électrique de l'alimentation.

Dans l'art antérieur l'effet négatif de telles surcharges électriques est évité par un dispositif de protection constitué par un bilame qui, placé entre la borne de tension positive et le point commun des premières extrémités précitées des bobines coupe temporairement l'alimentation du stator, lors d'une surintensité.

Mais, les caractéristiques du bilame sont choisies de construction et ne s'adaptent pas à la grande diversité des situations de surcharge. Si le bilame est surdimensionné, il ne protègera pas le moteur des faibles surintensités dont la durée d'application peut endommager le moteur. Si le bilame est adapté à de faibles surintensités, il coupera la rotation du moteur même pour de brèves surcharges qui seraient supportables par le moteur. Ces coupures sont préjudiciables à la qualité de la motorisation du dispositif auquel est couplé le moteur. C'est le cas par exemple d'un groupe moto-ventilateur pour climatiseur de voiture où les coupures intempestives réduisent l'efficacité de la climatisation et partant, le confort des passagers.

D'autre part, le bilame est un dispositif qui se réenclenche naturellement sans vraiment tenir compte de l'évolution instantanée de la surcharge.

Un autre dispositif de protection de moteur à commutation électronique, décrit dans le document US-A-4 694 371, consiste à bloquer les transistors de commande de la commutation pour interrompre la circulation du courant dans les enroulements du moteur lorsque la vitesse de rotation du moteur descend en dessous d'une valeur déterminée. Mais le circuit de protection du document US-A-4 694 371 ne protège le moteur que contre les calages, c'est à dire lorsqu'il y a annulation de la vitesse de rotation du moteur. Ce dispositif est inefficace contre les brusques variations de vitesse du moteur qui peuvent provoquer des surcharges électriques même si la vitesse de rotation ne s'annule pas.

Par ailleurs, il est connu du document US-A-4 044 287 de limiter les surcharges de courant dans un moteur électrique à commutation par balais, destiné à l'entraînement d'un ventilateur, en alimentant les enroulements du moteur électrique avec une source de courant constant. Celle-ci est constituée d'une batterie montée en parallèle avec un circuit série formé des enroulements du moteur, du circuit émetteur / collecteur d'un transistor bipolaire et d'une résistance de contrôle, la base du transistor bipolaire étant commandée par un amplificateur opérationnel qui compare la tension aux bornes de la résistance de contrôle avec une tension de référence.

C'est un objet de l'invention de remédier aux inconvénients de l'art antérieur.

La présente invention concerne en effet un dispositif de protection d'un moteur à commutation électronique contre les surcharges électriques entraînées par des variations de vitesse en fonctionnement, du type dans lequel au moins un enroulement statorique est connecté à au moins une source de tension d'alimentation continue par l'intermédiaire d'au moins un élément de commande dont une électrode reçoit un signal de commande élaboré par un circuit de pilotage comportant:

- un moyen de mesure produisant un signal représentatif de la charge électrique du moteur ;
- un circuit de détection de surcharge dont l'entrée reçoit ledit signal représentatif de la charge électrique, qui exécute un test d'une condition de surcharge qui y est enregistrée et qui produit en réponse un indicateur de surcharge ; et
- un circuit délesteur dont l'entrée reçoit l'indicateur de surcharge et qui produit au moins un signal agissant sur le circuit de pilotage d'au moins un élément de commande de façon à augmenter la tension aux bornes dudit élément de commande et/ou sur un moyen de blocage d'au moins un élément de commande.

Selon l'invention, le signal de mesure représentatif de la charge électrique du moteur électrique est obtenu par le calcul d'une fonction prédéterminée d'au moins l'un des paramètres suivants:

- la vitesse de rotation du moteur;
- la tension instantanée d'alimentation;
- la tension aux bornes de l'élément de commande; et la condition de surcharge enregistrée dans le circuit de détection de surcharge est vérifiée si la force contre électromotrice est plus faible que la tension d'alimentation, diminuée de la tension aux bornes de l'élément de commande, diminuée encore d'une tension limite de référence déterminée par le courant maximum admissible dans le moteur ou dans les éléments de commande.

Selon une autre caractéristique de l'invention, on réalise une détection de surcharge électrique pendant les périodes de variations suffisantes de vitesse, de façon à éviter de transmettre les surcharges électriques sur les enroulements pendant les périodes d'augmentation du courant dans une phase.

L'invention concerne aussi un moteur électrique à commutation électronique équipé d'un dispositif de protection contre les surcharges. Dans un mode de réalisation préféré, le moteur de l'invention incorpore un dispositif ou circuit de détection de surcharge sur un quelconque de ses enroulements et un moyen de protection du moteur agissant sur chacun des enroulements.

Dans un mode préféré de réalisation, le moteur est monodirectionnel et piloté en vitesse.

D'autres avantages et caractéristiques de la présente invention seront mieux compris à l'aide de la description et des dessins annexés qui sont :

- la figure 1 : un schéma de principe du circuit de commutation d'un moteur à commutation électronique ;
- la figure 2 : un schéma représentant la relation entre la vitesse de rotation du moteur et la tension aux bornes d'une phase ;
- la figure 3 : le schéma de principe du circuit de détection de l'invention ;
- la figure 4 : un mode de réalisation préféré d'un moteur incorporant l'invention.

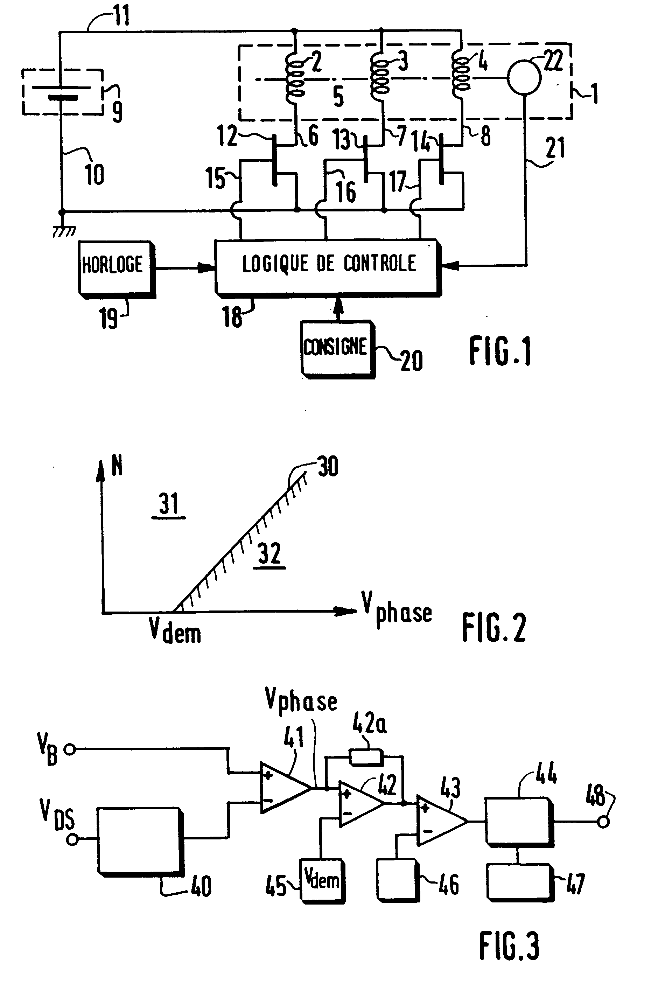

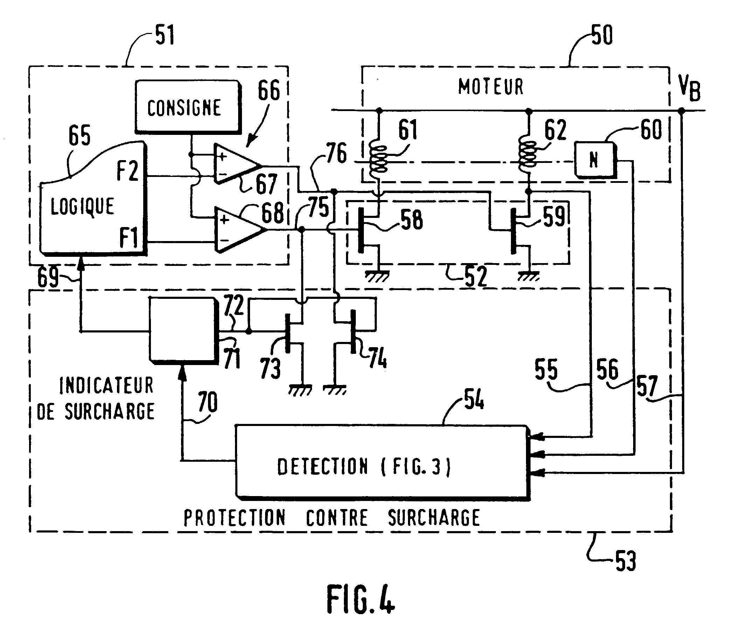

A la figure 1, on a représenté, à titre d'exemple, un schéma de principe du circuit de commutation d'un moteur à commutation électronique 1. Le moteur comporte un stator muni de trois phases référencées 2,3,4. Dans un mode de réalisation, le moteur est doté d'un capteur de position 22 lié à l'arbre de rotation du rotor. Ce capteur 22 produit un signal indiquant la position instantanée du rotor par rapport au stator. Ce signal est traité, ainsi qu'il est connu de façon à piloter les courants traversant les différentes bobines qui engendrent un champ tournant en synchronisme avec la rotation du rotor.

Une extrémité de chaque phase ou enroulement 2,3,4 est connectée à la borne 11 de tension positive d'une batterie 9. Les pieds d'enroulement 6,7 et 8 sont respectivement connectés aux drains des transistors à effet de champ 12,13,14. Respectivement, les électrodes de grille 15,16,17 sont connectées à un circuit 18 logique de contrôle, dit aussi circuit de pilotage, qui reçoit principalement des impulsions provenant d'une horloge 19, une tension de consigne fournie par un circuit 20 et une tension de contrôle 21 produite par le capteur 22, représentant le signal de position instantanée du rotor que l'on a décrit plus haut.

On remarque que l'invention ne se limite pas au cas des moteurs à commutation électronique équipés d'un capteur de position monté sur l'arbre du rotor comme un codeur incrémental. En effet, s'il est nécessaire pour synchroniser la commande des transistors à effet de champ de mesurer la position angulaire précise d'un axe fixe du rotor par rapport à un axe magnétique du stator, cette mesure peut être exécutée par d'autres moyens qu'un capteur d'angle sur l'arbre du rotor du moteur. Dans un mode de réalisation, la tension de contrôle est produite par des moyens de mesure d'au moins un courant traversant une phase. Dans un autre mode de réalisation, la tension de contrôle est produite par des moyens de mesure d'au moins une tension représentative de la force contre-électromotrice, tension mesurée notamment entre drain et source de l'élément de commande (transistor à effet de champ).

Ces trois moyens peuvent être utilisés d'autre part pour élaborer un paramètre de surcharge en vitesse de rotation du moteur.

D'autre part, les sources des transistors à effet de champ 12,13,14 sont connectées ensemble à la borne négative 10 de la batterie 9, elle-même souvent placée à la masse. C'est le cas notamment quand le moteur à commutation électronique est monté sur un véhicule, doté d'une batterie.

Les électrodes de grille 15,16,17 reçoivent des tensions de commande du circuit 18 de pilotage qui permettent de démarrer le moteur, de monter sa vitesse à une vitesse de fonctionnement désirée, et éventuellement de faire varier cette vitesse en fonction d'une consigne fournie par le circuit 20, générateur d'une consigne par exemple de vitesse.

La présente invention conduit à une modification du circuit 18 de pilotage, modification destinée à protéger le moteur du phénomène de surcharge électrique.

En effet à la figure 2 on a représenté un diagramme de fonctionnement du moteur. Ce diagramme comporte deux zones 31,32 limitées par une courbe limite 30, de surcharge. Ce sont respectivement une zone de fonctionnement normal 31 et une zone de fonctionnement interdit du moteur 32. Dans un mode de réalisation la courbe 30, séparant les deux zones 31 et 32, a pour origine la tension de démarrage $V_{dem}$ pour une phase donnée.

Dans un autre mode de réalisation, la courbe limite correspond à un courant dans la phase, limité au courant de démarrage. On peut déterminer d'autres zones interdites pour protéger le dispositif des surcharges. La vitesse de rotation N est portée sur l'axe vertical et la tension $V_{ph}$ aux bornes d'une phase est portée sur l'axe horizontal.

D'une manière générale, à N = 0 correspondant à l'instant de démarrage, il faut que la tension de phase $V_{Ph}$ soit au moins égale à la tension de démarrage $V_{dem}$ ou plus généralement à une tension limite $V_{lim}$.

En fonctionnement à une vitesse de rotation N dans la zone de fonctionnement normal 31, la force contre-électromotrice f.c.e.m. s'exprime par :

$$f.c.e.m = kN$$

La condition de surcharge, ou de déclenchement de la protection contre les surcharges, exprime que cette force contre-électromotrice doit être plus faible que la tension d'alimentation $V_B$, diminuée de la tension de déchet $V_{DS}$ sur le transistor de commutation diminuée encore d'une tension limite $V_{lim}$ comme la tension de démarrage $V_{dem}$, relation exprimée par :

$$f.c.e.m \leq V_B - V_{DS} - V_{lim}.$$

La valeur $V_{lim}$ est déterminée par le courant admissible dans le moteur ou dans les éléments de commande (au plus restrictif).

Dans un mode de réalisation, le dispositif de protection n'est pas actif pendant la période de démarrage du moteur. En effet, selon la condition de surcharge prise en compte dans le dispositif, le courant de démarrage peut être plus élevé que le courant admissible dans cette condition de surcharge. De ce fait, le dispositif de protection contre les surcharges ne permettrait pas au moteur de démarrer.

A cette fin, le dispositif de protection est muni d'un moyen destiné à valider son action en dehors de la période de démarrage. Dans un mode de réalisation, le moyen de validation de l'action du dispositif de protection comporte un interrupteur interposé entre la sortie du dispositif de protection et l'entrée correspondante du circuit de pilotage. Une durée de temporisation est réglée pendant la période de mise sous tension du moteur à une valeur prédéterminée, fonction du démarrage du moteur.

La mise sous tension du moteur est détectée par un moyen convenable, par exemple par une dérivation de l'ordre de fermeture du relais ou interrupteur de puissance sur la ligne d'alimentation. La dérivation est connectée à un circuit de temporisation qui transmet l'ordre de mise sous tension avec retard à l'électrode de commande de l'interrupteur disposé entre la sortie du dispositif de protection et l'entrée correspondante du circuit de pilotage.

Selon l'invention, le dispositif de protection contre les surcharges électriques est chargé de ramener le point de fonctionnement du moteur de la zone de fonctionnement interdit 32 à la zone de fonctionnement normal 31. Le dispositif de protection dispose de deux moyens combinables pour atteindre cet objectif :

a) réduire la tension aux bornes de la phase $V_{Ph}$ (le point de fonctionnement se déplace sur une ligne horizontale vers la gauche, ligne qui coupe la ligne limite 30),

b) réduire la vitesse N de rotation du moteur (le point de fonctionnement se déplace sur une ligne verticale de haut en bas) en annulant cette vitesse, puis en réduisant la tension $V_{Ph}$ sous la tension de démarrage.

A ces fins, le circuit de pilotage (comme le circuit 18 de la figure 1) comporte un organe de réduction de la tension $V_{Ph}$ qui comporte une entrée de réception d'un signal indicateur, ou indicateur, généré par le dispositif de protection de l'invention, qui, quand cet indicateur est actif, permet :

- ou bien de mettre l'électrode de commande (grille du transistor MOS) d'au moins l'un des transistors 15,16,17 à une tension de commande qui permet d'ouvrir le transistor (rendre la résistance $R_{DS}$ entre drain et source très élevée) ou encore de bloquer au moins ce transistor. Ceci a pour effet, si l'indicateur est fourni aux trois (n) phases, d'arrêter le moteur ;

- ou bien d'appliquer à la même électrode de commande une tension permettant d'augmenter la tension aux bornes dudit transistor.

Le dispositif de détection de surcharge sur une phase du stator comporte dans un mode de réalisation des premiers moyens de mesure de la tension instantanée aux bornes drain-source du transistor associé.

Dans un mode de réalisation, la mesure de tension est réalisée à des instants particuliers qui, dans le plan d'alimentation de chaque phase, sont choisis de façon à ne pas perturber, ou peu, le fonctionnement du moteur. Ceci peut avoir lieu quand la phase sur laquelle on cherche à détecter l'apparition d'une surcharge électrique est peu alimentée. L'action du dispositif de protection est appliquée sur toutes les phases.

A la figure 3, on a représenté un mode de réalisation analogique du circuit de détection d'un dispositif de protection selon l'invention.

Un premier soustracteur 41 reçoit sur son entrée positive (+), la tension batterie $V_B$ et sur son entrée moins une tension représentative de la tension de déchet $V_{DS}$ entre le drain et la source du transistor de commutation.

La sortie du soustracteur 41, qui est représentative de la tension $V_{ph}$ aux bornes de la phase puisqu'il s'agit de la différence entre la tension batterie $V_B$ et la tension de déchet $V_{DS}$ aux bornes de l'élément de commutation, est fournie à l'entrée positive d'un amplificateur opérationnel 42 monté en amplificateur présentant un gain de 1/K. Ce gain peut être réglé par le circuit 42a de réglage du gain de l'amplificateur.

L'autre entrée moins (-) de l'amplificateur opérationnel 42 reçoit une tension de référence fournie par un circuit 45 générateur d'une tension qui représente la tension de démarrage désirée et qui peut être réglée par une entrée convenable du circuit 45.

Dans un mode préféré de réalisation, le circuit 45 est constitué par un potentiomètre.

La sortie de l'amplicateur 42 est représentative de la différence entre la tension batterie $V_B$ diminuée de la tension de déchet $V_{DS}$ aux bornes de l'élément de commutation, diminuée encore d'une tension limite $V_{lim}$ qui est, dans le mode de réalisation présenté, égale à la tension de démarrage $V_{dem}$.

La sortie de l'amplificateur opérationnel 42 est transmise à la borne d'entrée positive (+) d'un comparateur 43 dont la borne d'entrée moins (-) est connectée à la sortie d'un circuit 46 qui fournit une tension représentative de la vitesse de rotation N du moteur.

Dans un mode de réalisation préféré, la tension 46 est élaborée à partir de la tension de contrôle générée par le capteur 22 intégré au moteur à commutation électronique 1 de la figure 1.

Enfin la sortie du comparateur 43 est transmise à un circuit monostable de temporisation 44, qui comporte une entrée de retard réglable par un circuit 47. Ce temporisateur comporte une sortie 48 qui est activée de façon à masquer les variations de vitesse responsables de surcharges transitoires. La période du temporisateur est liée à la surcharge transitoire maximum admissible. La sortie 48 est alors réinjectée sur l'électrode de grille du transistor à effet de champ de la phase ou des phases sur lequel on effectue la réduction de surcharge.

Dans un mode de réalisation préféré, la tension $V_{DS}$ de déchet est mesurée par échantillonnage, c'est-à-dire que le dispositif de l'invention fonctionne cycliquement. A cette fin, le circuit 40, qui reçoit le signal $V_{DS}$ représentatif de la tension au pied de la phase considérée, est un circuit échantillonneur-bloqueur dont le fonctionnement est synchronisé sur la fermeture de l'élément de commutation, ici le transistor à effet de champ de la phase considérée. Selon le point de réglage choisi, l'échantillonnage peut avoir lieu de une à plusieurs fois entre deux fermetures du transistor de commutation. Il est aussi prévu de régler la phase de l'échantillonnage par rapport à l'instant de début de la fermeture de l'élément de commutation.

A la figure 4, on a représenté un mode de réalisation de l'invention sur un moteur dans lequel on détecte les surcharges sur un enroulement prédéterminé de façon arbitraire si les trois phases sont équilibrées. La protection contre les surcharges est appliquée sur l'ensemble des enroulements du stator.

Dans d'autres réalisations, chaque voie du moteur comporte un élément de mesure ou de détection desdites surcharges et un moyen pour prévenir la poursuite de l'état de surcharge, le dispositif de l'invention étant répété sur chaque voie du moteur.

Dans le mode de réalisation de la figure 4, un moteur 50 est alimenté par une tension d'alimentation ou tension batterie $V_B$. D'autre part, un circuit 52 permet de commander les phases 61 et 62 du moteur 50. Le circuit 52 comporte des transistors à effet de champ de puissance 58 et 59 dont les chemins drain-source sont respectivement connectés entre le pied d'enroulement de chaque phase du stator et la masse.

Le nombre d'enroulements et de transistors n'est pas limité selon l'invention.

Les grilles 58g et 59g des transistors 58 et 59 sont des entrées du circuit 52 et sont connectées à des sorties respectives 75 et 76 d'un circuit 51 de pilotage du moteur. Le circuit 51 comporte principalement une partie logique 65 et une partie analogique 66. La partie logique 65 comporte notamment deux sorties F2 et F1 transmises respectivement à des amplificateurs opérationnels 67 et 68. Une première entrée de chaque amplificateur opérationnel 67 ou 68 reçoit respectivement un signal de sortie F2 ou un signal de sortie F1. Chaque voie d'enroulement 61 ou 62 est donc en correspondance avec la sortie d'un amplificateur opérationnel du circuit 51. L'autre entrée de chaque amplificateur opérationnel 67,68 reçoit une tension de consigne qui fixe par exemple la vitesse de rotation du moteur.

L'ensemble de ces circuits 50,51,52, tels que décrits ci-dessus, correspond à l'équipement normal d'un moteur à commutation électronique.

Le circuit 53, qui peut être réalisé sous forme intégrée par un circuit spécial, est un dispositif de protection contre les surcharges selon l'invention. Dans un mode de réalisation, qui est représenté aux dessins, le fonctionnement du circuit 51 peut être temporairement modifié, par exemple de façon microprogrammée, par une sortie 69 du circuit 53. La valeur de la sortie 69 et son effet seront expliqués plus loin.

Le circuit 53 comporte une partie, dite circuit de détection, 54 qui est réalisée, par exemple, selon le mode de réalisation représenté à la figure 3. Le circuit 54 comporte trois entrées. Ce sont respectivement l'entrée 55 qui reçoit le signal de mesure de la tension de déchet aux bornes du transistor 59, l'entrée 56 qui reçoit le signal de mesure de vitesse dérivée de la position mesurée par le capteur 60 asservi à la rotation du rotor, et l'entrée 57 qui reçoit le signal de mesure de la tension d'alimentation positive VB de la batterie. D'autre part, le circuit 54 comporte une sortie 70 d'indicateur de surcharge. Cet indicateur peut prendre au moins trois valeurs :

- une valeur où l'indicateur n'est pas actif par exemple notée "OO" en binaire si la sortie 70 est sur deux fils,
- une valeur "10" qui indique que les enroulements doivent être déconnectés,
- et une valeur "11" qui indique que l'on doit augmenter le niveau de tension de déchet des transistors lors des phases suivantes de fonctionnement du moteur.

Les états "10" ou "11" restant actifs tant que la surcharge existe, ou tant que le moteur n'a pas été redémarré par la procédure habituelle enregistrée dans le microprogramme du circuit logique 65.

L'indicateur de surcharge 70 est transmis à l'entrée correspondante d'un circuit délesteur 71 qui génère un signal de délestage à destination du circuit de pilotage 51.

Le circuit délesteur 71 décode l'indicateur de surcharge de façon :

- dans le cas où l'indicateur de surcharge indique une valeur "10", à placer à l'état haut une première sortie 72 connectée aux grilles 73g et 74g de transistors de puissance 73 et 74 pour les mettre en conduction,
- dans le cas où l'indicateur de surcharge indique une valeur "11", à émettre un message sur la sortie 69, fourni à une entrée de réception du circuit logique 65, de façon à commander un affaiblissement de l'alimentation du moteur 50, par décodage du message, puis exécution, par un microprogramme enregistré dans le circuit de pilotage 51 (65).

Chaque transistor 73,74 est connecté respectivement aux sorties 75,76 du circuit 51 de pilotage qui sont transmises aux entrées, ou électrodes de grille 58g et 59g, du circuit 52 de commande du moteur 50.

Quand la sortie 72 est au niveau haut, les transistors 73,74 sont mis en conduction et les transistors 58 et 59 du circuit 52 sont mis à l'état bloqué. De ce fait, le moteur est arrêté immédiatement.

L'invention, qui a été décrite ici, ne se limite pas à ces exemples donnés à titre illustratif, mais s'étend à tous les systèmes, dispositifs ou moteurs, définis dans les revendications annexées.

En particulier, le moteur décrit est de type monodirectionnel. Mais le dispositif de protection de l'invention peut être adapté pour un moteur de type bidirectionnel. De même, l'invention trouve application au cas où les éléments de commande sont montés entre deux tensions continues selon un montage en pont polyphasé, à raison d'une phase par enroulement, ou groupe d'enroulements, si une voie d'enroulement comporte plusieurs enroulements.

## Revendications

1. Dispositif de protection (53) d'un moteur à commutation électronique (50) contre les surcharges électriques entraînées par des variations de vitesse en fonctionnement, du type dans lequel au moins un enroulement statorique (61,62) est connecté à au moins une source de tension d'alimentation continue ($V_B$) par l'intermédiaire d'au moins un élément de commande (58,59) dont une électrode (58g,59g) reçoit un signal de commande d'un circuit de pilotage (51) comportant:

- un moyen de mesure produisant un signal représentatif (55,56,57) de la charge électrique du moteur ;
- un circuit (54) de détection de surcharge dont l'entrée reçoit ledit signal représentatif (55,56,57) de la charge électrique, qui exécute un test d'une condition de surcharge qui y est enregistrée et qui produit en réponse un indicateur de surcharge (70);
- un circuit délesteur (71) dont l'entrée reçoit l'indicateur de surcharge (70) et qui produit au moins un signal agissant sur le circuit de pilotage (51) d'au moins un élément de commande (52) de façon à augmenter (69) la tension aux bornes dudit élément de commande et/ou sur un moyen (72) de blocage d'au moins un élément de commande,

caractérisé en ce que le signal de mesure représentatif de la charge électrique du moteur électrique est obtenu par le calcul d'une fonction prédéterminée d'au moins l'un des paramètres suivants :

- la vitesse de rotation (N) du moteur;
- la tension instantanée d'alimentation ($V_B$) ;
- la tension (VDS) aux bornes de l'élément de commande (52),

et en ce que la condition de surcharge enregistrée dans le circuit (54) de détection de surcharge est vérifiée si la force contre électromotrice (f.c. e.m.) est plus faible que la tension d'alimentation ($V_B$), diminuée de la tension ($V_{DS}$) aux bornes de l'élément de commande, diminuée encore d'une tension limite de référence ($V_{lim}$, $V_{dem}$) déterminée par le courant maximum admissible dans le moteur ou dans les éléments de commande.

2. Dispositif selon la revendication 1, caractérisé en ce que le paramètre de vitesse de rotation du moteur est calculé à partir de la mesure (56) de la position instantanée du rotor (60).

3. Dispositif selon l'une des revendications précédentes, caractérisé en ce que le circuit (54) de détection de surcharge est associé à au moins une phase (61,62) du moteur à commutation électronique (50), et en ce qu'il comporte :

- un soustracteur (41) qui soustrait une tension ($V_{DS}$) mesurée aux bornes de l'élément de commande d'une tension de référence comme la tension ($V_B$) aux bornes de la source d'alimentation (9) ;
- un premier comparateur (42) dont une première entrée reçoit la tension de sortie du soustracteur (41), et dont une seconde entrée reçoit une tension élaborée par un circuit (45) générateur d'un signal représentatif de la tension limite ($V_{lim}$, $V_{dem}$) ;
- un deuxième comparateur (43) dont une première entrée reçoit la tension de sortie du premier comparateur (42), et dont une seconde entrée reçoit une tension représentative de la vitesse de rotation (N) du moteur ;
- et un circuit (44,47) pour fournir un indicateur de surcharge (48).

4. Dispositif selon la revendication 3, caractérisé en ce que la sortie du deuxième comparateur (43) est transmise à un circuit de temporisation (44,47)de façon à masquer les variations de vitesse responsables de surcharges transitoires.

5. Moteur électrique à commutation électronique, caractérisé en ce qu'il est équipé d'un dispositif de protection contre les surcharges selon l'une des revendications précédentes.

**Patentansprüche**

1. Schutzvorrichtung (53) für einen elektronisch geschalteten Elektromotor (50) gegen elektrische Überlastungen infolge von Drehzahländerungen während des Betriebs, bei der mindestens eine Ständerwicklung (61, 62) an mindestens eine Gleichspannungsquelle ($V_B$) über mindestens ein Steuerelement (58, 59) angeschlossen ist, von dem eine Elektrode (58g, 59g) ein Steuersignal von einer Steuerschaltung (51) empfängt, die die folgenden Teile umfaßt:

- ein Meßmittel, das ein für die elektrische Belastung des Motors repräsentatives Signal (55, 56, 57) erzeugt,
- eine Schaltung (54) zur Überlasterfassung, deren Eingang das besagte für die elektrische Belastung repräsentative Signal (55, 56, 57) empfängt, die einen Test einer darin abgespeicherten Überlastbedingung durchführt und die als Antwort einen Überlastindikator (70) erzeugt;
- eine Entlastungsschaltung (71), deren Eingang den Überlastindikator (70) empfängt und die mindestens ein Signal erzeugt, das auf die Steuerschaltung (51) mindestens eines Steuerelements (52) einwirkt, um die Spannung an den Klemmen des besagten Steuerelements zu erhöhen (69), und/oder auf ein Mittel (72) zur Sperrung mindestens eines Steuerelements,

**dadurch gekennzeichnet,** daß das für die elektrische Belastung des Elektromotors repräsentative Signal durch die Berechnung einer vorbestimmten Funktion mindestens eines der folgenden Parameter ermittelt wird:

- Drehzahl (N) des Motors,
- momentane Speisepannung ($V_B$),
- Spannung ($V_{DS}$) an den Klemmen des Steuerelements (52),

und daß die in der Schaltung (54) zur Überlasterfassung abgespeicherte Überlastbedingung verfiziert ist, wenn die gegenelektromotorische Kraft (Gegen-EMK) niedriger ausfällt als die Speisespannung ($V_B$), verringert um die Spannung ($V_{DS}$) an den Klemmen des Steuerelements, sowie verringert um eine Bezugsgrenzspannung ($V_{lim}$, $V_{dem}$), die durch den zulässigen Höchststrom im Motor oder in den Steuerelementen bestimmt ist.

**2.** Vorrichtung nach Anspruch 1 , **dadurch gekennzeichnet,** daß der Parameter Drehzahl des Motors
ausgehend von der Messung (56) der momentanen
Position des Läufers (60) berechnet wird.

**3.** Vorrichtung nach einem der vorangehenden Ansprüche, **dadurch gekennzeichnet,** daß die Schaltung (54) zur Überlasterfassung mit mindestens einer Phase (61, 62) des elektronisch geschalteten
Motors (50) verbunden ist und daß sie die folgenden Teile umfaßt:

- ein Subtrahierglied (41), das eine an den Klemmen des Steuerelements gemessene Spannung ($V_{DS}$) von einer Bezugsspannung wie der
Spannung ($V_B$) an den Klemmen der Spannungsquelle (9) subtrahiert;
- einen ersten Vergleicher (42), von dem ein erster Eingang die Ausgangsspannung des Subtrahierglieds (41) empfängt und von dem ein
zweiter Eingang eine Spannung empfängt, die
durch eine Schaltung (45) zur Generierung eines für die Grenzspannung ($V_{lim}$, $V_{dem}$) reprä-
sentativen Signals erzeugt wird;
- einen zweiten Vergleicher (43), von dem ein erster Eingang die Ausgangsspannung des ersten Vergleichers (42) empfängt und von dem
ein zweiter Eingang eine für die Drehzahl (N)
des Motors repräsentative Spannung empfängt;
- eine Schaltung (44, 47) zur Bereitstellung eines
Überlastindikators (48).

**4.** Vorrichtung nach Anspruch 3 , **dadurch gekennzeichnet,** daß der Ausgang des zweiten Vergleichers (43) an eine Verzögerungsschaltung (44, 47)
übertragen wird, um die Drehzahländerungen auszublenden, die für vorübergehende Überlastungen
verantwortlich sind.

**5.** Elektronisch geschalteter Elektromotor, **dadurch
gekennzeichnet,** daß er mit einer Überlastschutzvorrichtung nach einem der vorangehenden Ansprüche ausgerüstet ist.

**Claims**

**1.** Protection device (53) for an electronically switched
motor (50) against electrical overloads arising from
variations in operating speed, of the type in which
at least one stator winding (61, 62) is connected to
at least one source of DC supply voltage ($V_B$) by at
least one control element (58, 59), one electrode
(58g, 59g) of which receives a control signal from a
control circuit (51) having:

- a measurement means producing a signal (55,
56, 57) representing the current load on the motor;
- an overload detection circuit (54) whose input
receives the said signal (55, 56, 57) representing the current load, which performs an overload condition test which is recorded therein
and which produces in response an overload
indicator (70);
- a cut-off circuit (71) whose input receives the
overload indicator (70) and which produces at
least one signal acting on the control circuit (51)
of at least one control element (52) so as to increase (69) the voltage at the terminals of the
said control element and/or on a means (72) of
blocking at least one control element,

characterised in that the measurement signal representing the current load on the electric motor is
obtained by calculating a predetermined function of
at least one of the following parameters:

- the rotation speed (N) of the motor;
- the instantaneous supply voltage ($V_B$) ;
- the voltage (VDS) at the terminals of the control
element (52),

and in that the overload condition recorded in the
overload detection circuit (54) is verified if the back-
electromotive force (b.e.m.f.) is lower than the supply voltage ($V_B$), minus the voltage ($V_{DS}$) at the terminals of the control element, also minus a reference limit voltage ($V_{lim}$, $V_{dem}$) determined by the
maximum permissible current in the motor or in the
control elements.

**2.** Device according to Claim 1, characterised in that
the rotation speed parameter of the motor is calculated on the basis of the measurement (56) of the
instantaneous position of the rotor (60).

**3.** Device according to one of the preceding claims,
characterised in that the overload detection circuit
(54) is associated with at least one phase (61, 62)
of the electronically switched motor (50), and in that
it includes:

- a subtracter (41) which subtracts a voltage
($V_{DS}$) measured at the terminals of the control
element from a reference voltage such as the
voltage ($V_B$) at the terminals of the supply
source (9);
- a first comparator (42), a first input of which receives an output voltage from the subtractor (41), and a second input of which receives a voltage produced by a circuit (45) which generates a signal representing the limit voltage ($V_{lim}$, $V_{dem}$);

- a second comparator (43), a first input of which receives the output voltage from the first comparator (42) and a second input of which receives a voltage representing the rotation speed (N) of the motor;

- and a circuit (44, 47) for supplying an overload indicator (48).

4. Device according to Claim 3, characterised in that the output of the second comparator (43) is transmitted to a time-delay circuit (44, 47) so as to mask the speed variations responsible for transient overloads.

5. Electronically switched electric motor, characterised in that it is equipped with a protection device against overloads according to one of the preceding claims.

FIG.1

FIG.2

FIG.3

FIG.4